# FASCICULE DE BREVET EUROPEEN

(11) **EP 3 556 009 B1**
(45) Date de publication et mention de la délivrance du brevet: **12.05.2021**
(21) Numéro de dépôt: 17822215.4
(22) Date de dépôt: 13.12.2017
(51) Int. Cl.: H02P 6/08

(54) **DISPOSITIF DE PILOTAGE D'UN MOTEUR ELECTRIQUE**
VORRICHTUNG ZUR STEUERUNG EINES ELEKTROMOTORS
DEVICE FOR CONTROLLING AN ELECTRIC MOTOR

(30) Priorité: 19.12.2016 FR 1662795
(43) Date de publication de la demande: 23.10.2019
(73) Titulaire: Safran Electronics & Defense, 75015 Paris (FR)
(72) Inventeur: GUILLOT, François, 75015 Paris (FR); PIATON, Jérôme, 75015 Paris (FR)
(74) Mandataire: Lavaud, Thomas
(86) Numéro de dépôt international: PCT/EP2017/082531
(87) Numéro de publication internationale: WO 2018/114497

(56) Documents cités:
- EP-A2- 1 596 494
- WO-A1-94/27361
- US-A1- 2003 210 006
- US-A1- 2006 061 336
- US-B1- 6 320 350

## Description

L'invention concerne le domaine des dispositifs de pilotage de moteur électrique.

### ARRIERE PLAN DE L'INVENTION

L'alimentation d'un moteur électrique tel qu'un moteur synchrone triphasé nécessite, pour produire une consigne de courant du moteur électrique, de convertir une tension continue en une tension alternative triphasée contrôlée.

Pour cela, il est connu dans le domaine aéronautique, d'utiliser des solutions numériques utilisant des composants de type DSP, ASIC ou FPGA. Ces solutions sont soit très compliquées à concevoir, à qualifier et à certifier, du fait notamment du niveau d'exigence élevé des normes RTCA DO-254 et DO-278, soit peu fiables, soit trop peu performantes au regard des perturbations électromagnétiques générées sur les réseaux de bord ou au regard des performances du système.

Il a été envisagé d'utiliser des solutions de filtrage passif, utilisant par exemple des inductances et des condensateurs. Ces solutions sont satisfaisantes mais nécessitent un volume important pour loger les composants de filtrage.

Le document US 2003/210006 A1 divulgue un dispositif de pilotage de moteur électrique de l'art antérieur.

### OBJET DE L'INVENTION

L'invention a pour objet une solution pour produire une consigne de courant d'un moteur électrique qui ne présente pas les inconvénients cités ci-dessus.

### RESUME DE L'INVENTION

En vue de la réalisation de ce but, on propose un dispositif de pilotage d'un moteur électrique comprenant trois phases, le dispositif de pilotage comportant :
- un onduleur et un module de commande qui génère des signaux de commande de l'onduleur pour mettre en œuvre une boucle d'asservissement en courant du moteur électrique ;
- un module d'excitation produisant un signal d'excitation ;
- un synchro-transmetteur comprenant deux enroulements de couplage, un enroulement d'excitation solidaire en rotation d'un rotor du moteur électrique et trois enroulements de mesure montés sur un stator du moteur électrique, le signal d'excitation étant appliqué sur l'enroulement d'excitation via les deux enroulements de couplage ;
- trois premiers démodulateurs synchrones reliés chacun à l'un des trois enroulements de mesure du synchro-transmetteur, et générant chacun, à destination du module de commande, une consigne de courant de la boucle d'asservissement en courant.

L'utilisation du synchro-transmetteur et des premiers démodulateurs synchrones constitue une solution simple, fiable, et peu volumineuse pour générer la consigne de courant de la boucle d'asservissement en courant du moteur électrique.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente une boucle d'asservissement en courant du dispositif de pilotage selon l'invention, et illustre le fonctionnement de celle-ci ;
- les figures 2 et 3 représentent le mode de couplage et de génération des informations de consigne de courant en fonction de la position angulaire ainsi que la solution de communication via le synchro transmetteur des informations permettant de mesurer la vitesse angulaire, indépendamment l'une de l'autre ;

- la figure 4 est un schéma du dispositif complet de pilotage selon l'invention ;
- la figure 5 représente un exemple de réalisation du module d'excitation du dispositif de pilotage selon l'invention, et illustre le fonctionnement de celui-ci ;
- la figure 6 représente un exemple de réalisation des premiers démodulateurs synchrones du dispositif de pilotage selon l'invention ;
- la figure 7 représente un exemple de réalisation des démodulateurs synchrones du dispositif de mesure de vitesse angulaire selon l'invention, deuxièmes démodulateurs qui sont reliés à un module de mesure de vitesse angulaire ;
- la figure 8 représente des moyens de détection et de protection contre une divergence de la boucle d'asservissement en courant.

### DESCRIPTION DETAILLEE DE L'INVENTION

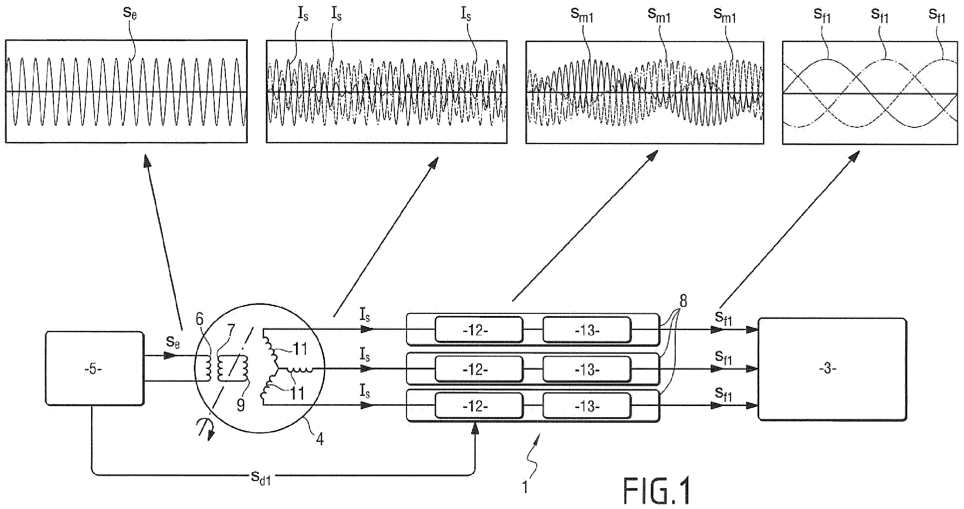

En référence à la figure 1, le dispositif de pilotage selon l'invention 1 est ici utilisé pour piloter un moteur électrique synchrone triphasé.

Le dispositif de pilotage 1 comporte un module de commande 3, ici du type à modulation de largeur d'impulsion (module MLI), un synchro-transmetteur 4, un module d'excitation 5, et trois premiers démodulateurs synchrones 8.

Le module de commande 3 est utilisé pour générer des signaux de commande triphasés pour piloter un onduleur qui alimente le moteur électrique.

Le synchro-transmetteur 4 comprend un premier enroulement de couplage 6, un deuxième enroulement de couplage 7, un enroulement d'excitation 9 solidaire en rotation d'un rotor du moteur électrique et trois enroulements de mesure 11.

Le premier enroulement de couplage 6, fixe, est relié au module d'excitation 5. Le premier enroulement de couplage 6 est couplé magnétiquement au deuxième enroulement de couplage 7 qui est, lui, solidaire en rotation du rotor du moteur électrique. Les bornes du deuxième enroulement de couplage 7 sont reliées aux bornes de l'enroulement d'excitation 9.

Le module d'excitation 5 produit un signal d'excitation Se à une fréquence d'excitation fe, qui est appliqué sur l'enroulement d'excitation 9 du synchro-transmetteur 4 via le premier enroulement de couplage 6 et le deuxième enroulement de couplage 7. La fréquence fe est ici égale à 10kHz. Le signal d'excitation Se induit ainsi un courant statorique Is dans chaque enroulement de mesure 11 du synchro-transmetteur 4. Chaque courant statorique Is présente une amplitude qui est fonction de la position angulaire du rotor du moteur électrique.

Les trois premiers démodulateurs synchrones 8 sont reliés chacun à l'un des enroulements de mesure 11 du synchro-transmetteur 4.

Chaque premier démodulateur synchrone 8 comprend un premier multiplieur 12 et un premier filtre passe-bas 13. Le premier multiplieur 12 reçoit du module d'excitation 5 un premier signal de démodulation Sd1 à la fréquence d'excitation fe et multiplie le courant statorique Is, présent sur l'enroulement de mesure 11 auquel est relié le premier multiplieur 12, par le premier signal de démodulation Sd1. Un premier signal multiplié Sm1, en sortie du premier multiplieur 12, est appliqué en entrée du premier filtre passe-bas 13.

Le premier filtre passe-bas 13 est ici un filtre Butterworth du troisième ordre présentant une fréquence de coupure à -3dB de 5kHz, ou bien un filtre actif Sallen Key du troisième ordre présentant une fréquence de coupure à - 3dB de 5kHz, ou bien un autre type de filtre passe-bas.

Un premier signal filtré Sf1 sortant du premier filtre passe-bas 13 de chaque premier démodulateur synchrone 8 est appliqué en entrée du module de commande 3.

Le module de commande 3 reçoit ainsi trois premiers signaux filtrés Sf1 qui présentent chacun une phase et une amplitude qui dépend de la position angulaire du rotor du moteur électrique. Les trois premiers signaux filtrés Sf1 forment chacun une consigne de courant d'une boucle d'asservissement en courant du moteur électrique.

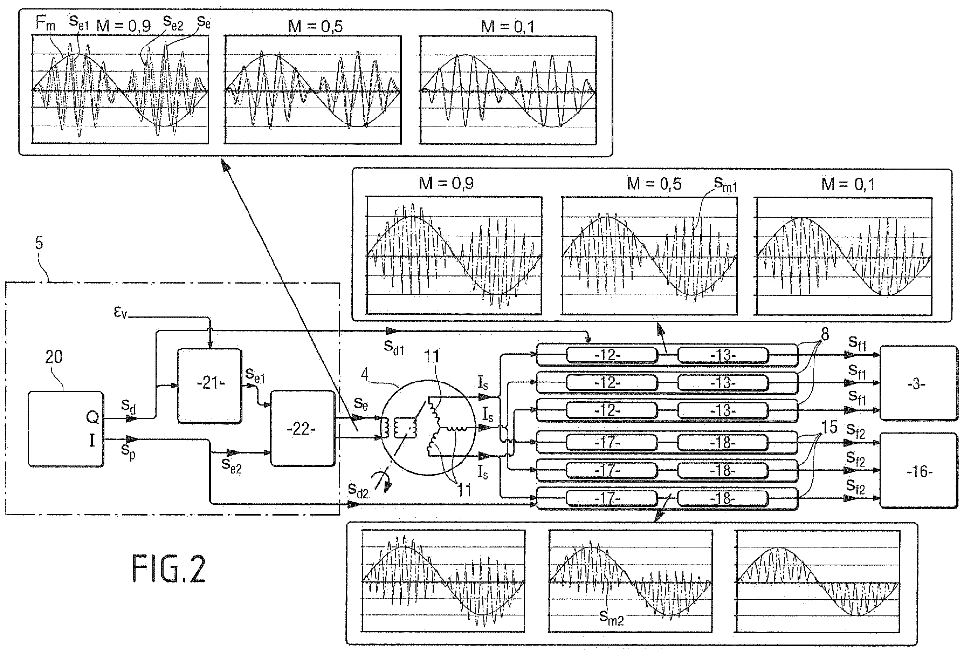

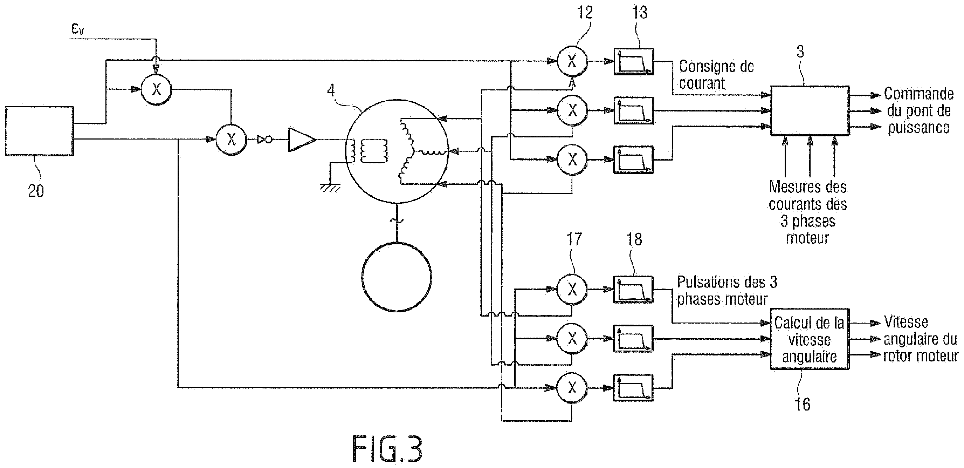

En référence aux figures 2 et 3, le dispositif de pilotage 1 comporte de plus trois deuxièmes démodulateurs synchrones 15 et un module de mesure de vitesse angulaire 16 qui est relié aux deuxièmes démodulateurs synchrones 15. Les deuxièmes démodulateurs synchrones 15 sont reliés chacun à l'un des enroulements de mesure 11 du synchro-transmetteur 4.

Chaque deuxième démodulateur synchrone 15 comprend un deuxième multiplieur 17 et un deuxième filtre passe-bas 18. Le deuxième multiplieur 17 reçoit du module d'excitation 5 un deuxième signal de démodulation Sd2 à la fréquence d'excitation fe et multiplie le courant statorique Is, présent sur l'enroulement de mesure 11 auquel est relié le deuxième multiplieur 17, par le deuxième signal de démodulation Sd2. Un deuxième signal multiplié Sm2, en sortie du deuxième multiplieur, est appliqué en entrée du deuxième filtre passe-bas 18.

Le deuxième filtre passe-bas 18 est ici un filtre Butterworth du troisième ordre présentant une fréquence de coupure à -3dB de 5kHz, ou bien un filtre actif Sallen Key du troisième ordre présentant une fréquence de coupure à - 3dB de 5kHz, ou bien un autre type de filtre passe-bas.

Un deuxième signal filtré Sf2 sortant du deuxième filtre passe-bas 18 de chaque deuxième démodulateur synchrone 15 est appliqué en entrée du module de mesure de vitesse angulaire 16.

Le module de mesure de vitesse angulaire 16 reçoit ainsi trois deuxièmes signaux filtrés Sf2 présentant chacun une amplitude qui dépend de la position angulaire du rotor du moteur électrique. Les trois deuxièmes signaux filtrés Sf2 forment donc chacun une information de position angulaire du rotor du moteur électrique. Les trois deuxièmes signaux filtrés Sf2 permettent d'obtenir une vitesse angulaire mesurée du rotor du moteur électrique. La vitesse angulaire mesurée permet de générer une erreur de vitesse angulaire εv d'une boucle d'asservissement en vitesse angulaire du moteur électrique.

Le module d'excitation 5 comporte un générateur IQ 20, un modulateur 21 et un sommateur 22. Le sommateur 22 est ici un sommateur analogique.

Le générateur IQ 20 comporte une sortie Q et une sortie I. Un signal déphasé Sd par rapport à un signal de référence à la fréquence d'excitation est présent sur la sortie Q du générateur IQ. Un signal en phase Sp par rapport au signal de référence à la fréquence d'excitation est présent sur la sortie I du générateur IQ. Le signal en phase Sp et le signal déphasé Sd sont déphasés de 90°.

Le premier signal de démodulation Sd1 est le signal déphasé Sd. Le deuxième signal de démodulation Sd2 est le signal en phase Sp.

Le modulateur 21 reçoit l'erreur de vitesse angulaire εv de la boucle d'asservissement en vitesse angulaire du moteur électrique et multiplie l'amplitude du signal déphasé Sd par l'erreur de vitesse angulaire εv (et par +/-1 selon le sens de rotation du rotor du moteur électrique).

Le modulateur 21 produit ainsi un premier signal d'excitation Sel à partir du signal déphasé Sd présent sur la sortie Q du générateur IQ 20.

Un deuxième signal d'excitation Se2 est produit à partir du signal en phase Sp ; le deuxième signal d'excitation Se2 est en l'occurrence égal au signal en phase Sp. L'amplitude du deuxième signal d'excitation Se2 est donc constante.

Le sommateur 22 somme alors le premier signal d'excitation Sel et le deuxième signal d'excitation Se2 pour obtenir le signal d'excitation Se.

On voit ainsi, sur les courbes de la figure 2, le premier signal d'excitation Se1, le deuxième signal d'excitation Se2, et le signal d'excitation Se, lorsque le rapport M de l'amplitude entre le deuxième signal d'excitation Se2 et le premier signal d'excitation Sel est égal à 0,9, lorsque le rapport M est égal à 0,5, et lorsque le rapport M est égal à 0,1. Sur ces courbes, la fréquence Fm du moteur électrique est égale à 500Hz, et donc la vitesse angulaire du rotor du moteur électrique est égale à 15000 tours/minute.

On voit aussi, sur les courbes de la figure 2, le premier signal multiplié Sm1, lorsque le rapport M de l'amplitude entre le deuxième signal d'excitation Se2 et le premier signal d'excitation Sel est égal à 0,9, lorsque le rapport M est égal à 0,5, et lorsque le rapport M est égal à 0,1.

On voit aussi, sur les courbes de la figure 2, le deuxième signal multiplié Sm2, lorsque le rapport M de l'amplitude entre le deuxième signal d'excitation Se2 et le premier signal d'excitation Se1 est égal à 0,9, lorsque le rapport M est égal à 0,5, et lorsque le rapport M est égal à 0,1.

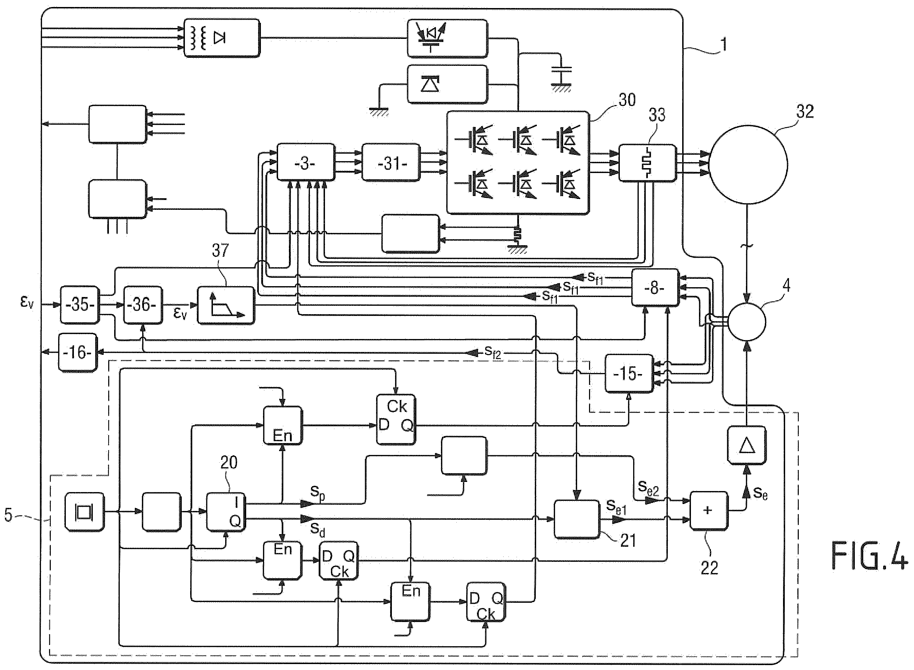

On retrouve sur la figure 4 l'ensemble des éléments du dispositif de pilotage 1 qui viennent d'être décrits.

Le module de commande 3 génère les signaux de commande triphasés qui sont transmis à l'onduleur 30 via une interface de pont de puissance 31.

Le moteur électrique 32 est asservi en courant grâce à la boucle d'asservissement en courant qui comporte le module de commande 3, le synchro-transmetteur 4, les premiers démodulateurs synchrones 8 et le module d'excitation 5. Les trois premiers signaux filtrés Sf1 en sortie des premiers démodulateurs synchrones 8 forment chacun une consigne de courant de la boucle d'asservissement en courant. La boucle d'asservissement en courant comporte en outre un module de mesure de courant 33 qui produit des mesures de courants de phase qui sont présents sur les phases du moteur électrique 32 et qui alimentent le moteur électrique 32.

Le moteur électrique 32 est asservi en vitesse angulaire grâce à la boucle d'asservissement en vitesse angulaire qui comporte le module de mesure de vitesse angulaire 16, le synchro-transmetteur 4, les deuxièmes démodulateurs synchrones 15 et le module d'excitation 5.

La boucle d'asservissement en vitesse angulaire comporte en outre une interface de consigne de vitesse angulaire 35, un module de mesure d'erreur de vitesse angulaire 36, et un bloc de traitement 37.

L'interface de consigne de vitesse angulaire 35 reçoit une consigne de vitesse angulaire Cv et transmet la consigne de vitesse angulaire Cv au module de mesure d'erreur de vitesse angulaire 36. L'interface de consigne de vitesse angulaire 35 transmet aussi au module de commande 3 une autorisation de commande du moteur électrique 32, et aux premiers démodulateurs synchrones 8 le sens de rotation du rotor du moteur électrique 32.

Le module de mesure d'erreur de vitesse angulaire 36 produit une erreur de vitesse angulaire εv à partir de la consigne de vitesse angulaire Cv et de la vitesse angulaire mesurée produite à partir des trois deuxièmes signaux filtrés Sf2 en sortie des trois deuxièmes démodulateurs synchrones 15.

Le bloc de traitement 37, qui met en œuvre un amplificateur d'erreur et un filtre passe-bas du premier ordre, transmet l'erreur de vitesse angulaire εv au bloc modulateur 21 du module d'excitation 5.

On obtient ainsi une boucle d'asservissement en courant et une boucle d'asservissement en vitesse angulaire du moteur électrique 32 qui sont imbriquées grâce au synchro-transmetteur 4 et grâce au module d'excitation 5. Les consignes de courant de la boucle d'asservissement en courant, à partir desquelles le module de commande 3 commande l'onduleur 30 et pilote le moteur électrique 32, sont générées à partir de l'erreur de vitesse angulaire εv. L'erreur de vitesse angulaire εv est elle-même utilisée pour produire le premier signal d'excitation Se1 à partir du signal déphasé Sd présent sur la sortie Q du générateur IQ 20, et donc le signal d'excitation Se qui est appliqué sur l'enroulement d'excitation 9 du synchro-transmetteur 4.

On note que l'information de position angulaire, permettant d'obtenir la mesure de vitesse angulaire (voie Q) est indépendante des consignes de courant (voie I).

En effet, les signaux I et Q sont en quadrature et sont indépendants et démodulés comme tels par les premiers démodulateurs synchrones et par les deuxièmes démodulateurs synchrones. On décrit maintenant plus précisément certains des éléments qui viennent d'être évoqués.

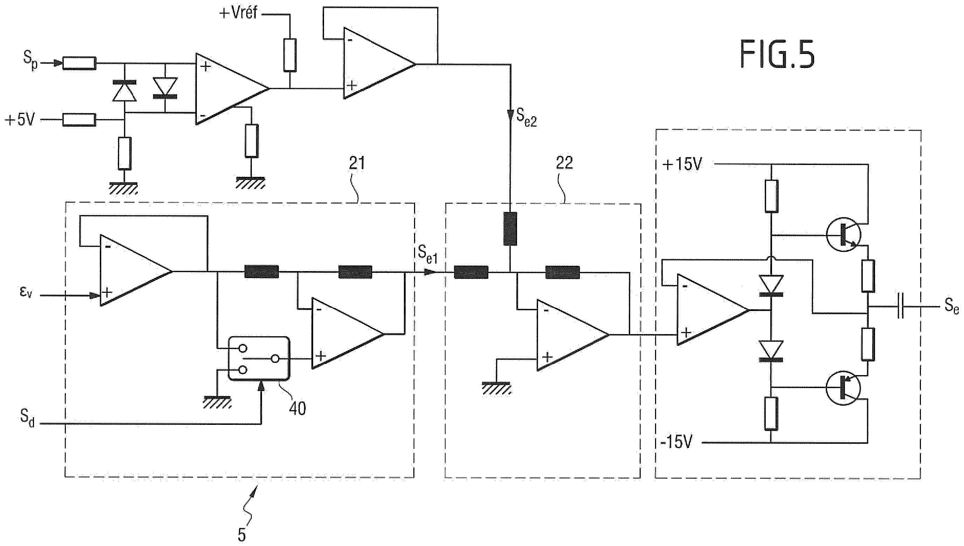

En référence à la figure 5, le module d'excitation 5 produit à partir du signal en phase Sp (présent sur la sortie I du générateur IQ) le premier signal d'excitation Se1. Le module d'excitation 5 produit aussi le signal déphasé Sd (présent sur la sortie Q du générateur IQ), et reçoit une erreur de vitesse angulaire εv. Le signal déphasé Sd et l'erreur de vitesse angulaire εv sont transmis au modulateur 21. Le modulateur 21 comprend un multiplieur 40, qui multiplie l'amplitude du signal déphasé Sd par l'erreur de vitesse angulaire εv pour obtenir le deuxième signal d'excitation Se2. Le sommateur 22 additionne le premier signal d'excitation Se1 et le deuxième signal d'excitation Se2, et un module de puissance 41 produit à partir de la sortie du sommateur 22 le signal d'excitation Se.

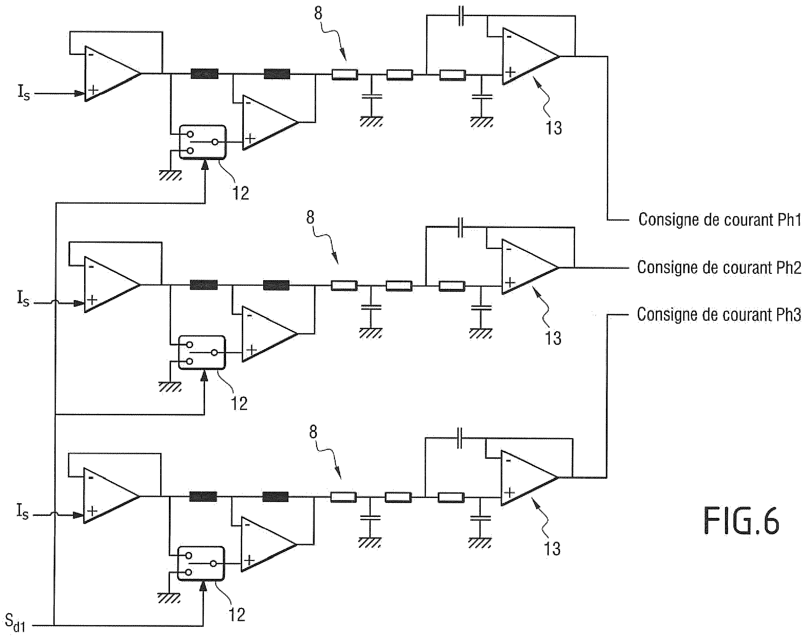

En référence à la figure 6, les premiers démodulateurs synchrones 8 comportent chacun un premier multiplieur 12 et un premier filtre passe bas 13. Chaque premier multiplieur 12 multiplie le premier signal de démodulation Sd1 par le courant statorique Is présent sur l'enroulement de mesure 11 auquel est relié le premier multiplieur 12.

Le premier filtre passe-bas 13 représenté sur la figure 5 est un filtre actif Sallen Key du troisième ordre présentant une fréquence de coupure à -3dB de 5kHz et une atténuation de 36dB à la fréquence de 20kHz (ladite fréquence correspondant à la fréquence du signal redressé double alternance de la fréquence fe=10kHz).

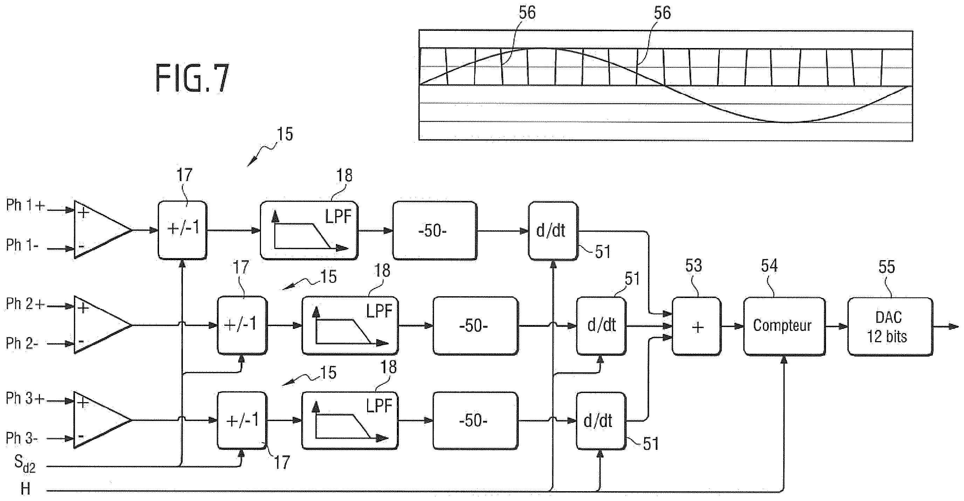

En référence à la figure 7, chaque deuxième démodulateur synchrone 15 comporte un deuxième multiplieur 17, qui multiplie une tension représentative du signal présent sur l'enroulement de mesure 11 auquel est relié le deuxième démodulateur synchrone 15 par le deuxième signal de démodulation Sd2.

Les tensions représentatives des signaux présents sur les enroulements de mesure 11 sont Ph1₊ - Ph1-, Ph2₊ - Ph2- et Ph3₊ - Ph3-. Un gain de +/-1 est par ailleurs appliqué par chaque deuxième multiplieur 17.

En sortie de chaque deuxième multiplieur 17, le deuxième signal multiplié est appliqué en entrée d'un deuxième filtre passe-bas 18. La sortie du deuxième filtre passe-bas 18 est appliquée en entrée d'un comparateur 50 du module de mesure de vitesse angulaire 16, qui est ici un comparateur à six niveaux. La sortie du comparateur 50 est dérivée par un dérivateur 51 cadencé par une horloge H de fréquence d'horloge ici égale à 5,12MHz.

Puis, les sorties de chaque dérivateur 51 sont sommées par un sommateur 53. On obtient ainsi un signal numérique de vitesse angulaire comprenant dix-huit impulsions 56 par tour du rotor du moteur électrique 32. La sortie du sommateur 53 est appliquée en entrée d'un compteur 54. La sortie du compteur 54 est appliquée en entrée d'un convertisseur numérique analogique 55. Le convertisseur numérique analogique 55 est ici un convertisseur numérique analogique douze bits cadencé lui aussi par l'horloge H. Le convertisseur numérique analogique 55 produit, à partir de la sortie du compteur 54, une vitesse angulaire mesurée qui est une mesure analogique.

La vitesse angulaire mesurée est ensuite utilisée par le module de mesure d'erreur de vitesse angulaire 36 (visible sur la figure 3) pour produire l'erreur de vitesse angulaire εv.

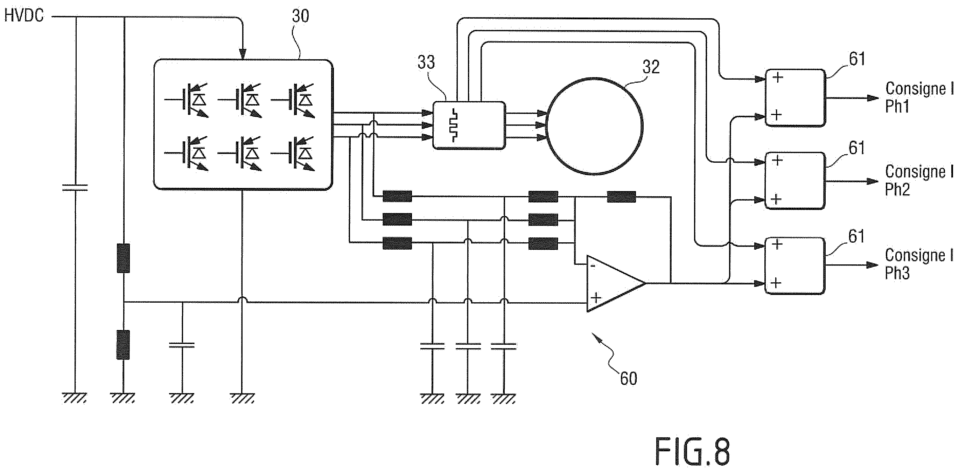

En référence à la figure 8, le dispositif de pilotage 1 comporte de plus des moyens de protection contre une divergence de la boucle d'asservissement en courant du moteur électrique 32.

Les moyens de protection utilisent le module de mesure de courant 33 et comprennent un module de mesure de tension moyenne 60 et trois sommateurs 61.

Chaque sommateur 61 additionne une mesure d'un courant de phase présent sur une phase du moteur électrique 32 et produite par le module de mesure de courant 33, et une tension moyenne générée par le module de mesure de tension moyenne 60, ladite tension moyenne étant égale à une moyenne des tensions présentes sur chaque phase en sortie de l'onduleur 30.

Le module de commande 3 reçoit les signaux en sortie des sommateurs 61 et, grâce à ces signaux, corrige les offsets moyens des courants de phase et la tension moyenne en sortie de l'onduleur 30 en adaptant les signaux de commande triphasés qui pilotent l'onduleur 30.

Bien entendu, l'invention n'est pas limitée au mode de réalisation décrit mais englobe toute variante entrant dans le champ de l'invention telle que définie par les revendications.

Les valeurs des fréquences citées dans ce document et, notamment, la valeur de la fréquence d'excitation, ne sont données qu'à titre d'exemple, et pourraient bien sûr être différentes.

De même, les ordres et les fréquences de coupure des filtres passe-bas pourraient être différents. Les filtres passe-bas ne sont pas nécessairement des filtres de type Butterworth ou Sallen Key.

De même, les amplitudes des signaux visibles sur les figures 1 et 2 pourraient bien sûr être différentes.

## Revendications

1. Dispositif de pilotage d'un moteur électrique (32) comprenant trois phases, le dispositif de pilotage comportant :
- un onduleur (30) et un module de commande (3) qui génère des signaux de commande de l'onduleur pour mettre en œuvre une boucle d'asservissement en courant du moteur électrique (32) ;
- un module d'excitation (5) produisant un signal d'excitation (Se);
le dispositif de pilotage étant **caractérisé en ce qu'**il comporte en outre :
- un synchro-transmetteur (4) comprenant deux enroulements de couplage, un enroulement d'excitation (9) solidaire en rotation d'un rotor du moteur électrique et trois enroulements de mesure (11) montés sur un stator du moteur électrique, le signal d'excitation étant appliqué sur l'enroulement d'excitation (9) via les deux enroulements de couplage ;
- trois premiers démodulateurs synchrones (8) reliés chacun à l'un des trois enroulements de mesure du synchro-transmetteur, et générant chacun, à destination du module de commande, une consigne de courant de la boucle d'asservissement en courant.

2. Dispositif de pilotage selon la revendication 1, comprenant en outre trois deuxièmes démodulateurs synchrones (15) reliés chacun à l'un des trois enroulements de mesure du synchro-transmetteur pour produire une information de position angulaire du rotor.

3. Dispositif de pilotage selon la revendication 2, dans laquelle l'information de position angulaire du rotor est indépendante des consignes de courant.

4. Dispositif de pilotage selon la revendication 3, comprenant un module de mesure de vitesse angulaire (16) du rotor du moteur électrique relié aux deuxièmes démodulateurs synchrones, le module de mesure de vitesse angulaire étant utilisé pour générer une erreur de vitesse angulaire (εv) d'une boucle d'asservissement en vitesse angulaire du moteur électrique (32).

5. Dispositif de pilotage selon la revendication 4, dans lequel le signal d'excitation (Se) est modulé en amplitude par l'erreur de vitesse angulaire (εv).

6. Dispositif de pilotage selon la revendication 5, dans lequel le signal d'excitation est obtenu en sommant un premier signal d'excitation (Se1) présentant une amplitude fonction de l'erreur de vitesse angulaire et un deuxième signal d'excitation (Se2), les premiers démodulateurs synchrones étant adaptés chacun à détecter un signal de même fréquence et en phase avec le premier signal d'excitation, et les deuxièmes démodulateurs synchrones étant adaptés chacun à détecter un signal de même fréquence et en phase avec le deuxième signal d'excitation.

7. Dispositif de pilotage selon la revendication 6, dans lequel le module d'excitation comporte un générateur de type IQ (20), le premier signal d'excitation étant produit à partir d'un signal déphasé par rapport à un signal de référence et présent sur une sortie Q du générateur de type IQ, et le deuxième signal d'excitation étant produit à partir d'un signal en phase avec le signal de référence et présent sur une sortie I du générateur de type IQ.

8. Dispositif de pilotage selon la revendication 7, dans lequel le signal déphasé et le signal en phase sont déphasés de 90°.

9. Dispositif de pilotage selon la revendication 7, dans lequel le module d'excitation (5) comporte en outre un modulateur (21) et un sommateur (22), le modulateur multipliant par l'erreur de vitesse angulaire le signal déphasé pour obtenir le premier signal d'excitation, le deuxième signal d'excitation étant le signal en phase, et le sommateur étant adapté à sommer le premier signal d'excitation et le deuxième signal d'excitation pour obtenir le signal d'excitation.

10. Dispositif de pilotage selon la revendication 1, dans lequel le module de commande (3) est du type à modulation de largeur d'impulsion.

## Patentansprüche

1. Steuervorrichtung zur Steuerung eines Elektromotors (32), der drei Phasen umfasst, wobei die Steuervorrichtung umfasst:
- einen Wechselrichter (30) und ein Steuermodul (3), das Steuersignale für den Wechselrichter erzeugt, um eine Stromregelschleife für den Elektromotor (32) zu implementieren;
- ein Anregungsmodul (5), das ein Anregungssignal (Se) erzeugt;
wobei die Steuervorrichtung **dadurch gekennzeichnet ist, dass** sie ferner umfasst:
- einen Drehmelder (4), der zwei Kopplungswicklungen, eine drehfest mit einem Rotor des Elektromotors verbundene Anregungswicklung (9) und drei Messwicklungen (11) umfasst, die auf einem Stator des Elektromotors montiert sind, wobei das Anregungssignal über die beiden Kopplungswicklungen an der Anregungswicklung (9) angelegt wird;
- drei erste synchrone Demodulatoren (8), die jeweils mit einer der drei Messwicklungen des Drehmelders verbunden sind und jeweils einen Stromsollwert für die Stromregelschleife mit Ziel Steuermodul erzeugen.

2. Steuervorrichtung nach Anspruch 1, ferner umfassend drei zweite synchrone Demodulatoren (15), die jeweils mit einer der drei Messwicklungen des Drehmelders verbunden sind, um eine Winkelpositionsinformation des Rotors zu erzeugen.

3. Steuervorrichtung nach Anspruch 2, bei der die Winkelpositionsinformation des Rotors unabhängig von den Stromsollwerten ist.

4. Steuervorrichtung nach Anspruch 3, umfassend ein Winkelgeschwindigkeitsmessmodul (16) zum Messen der Winkelgeschwindigkeit des Rotors des Elektromotors, das mit den zweiten synchronen Demodulatoren verbunden ist, wobei das Winkelgeschwindigkeitsmessmodul verwendet wird, um einen Winkelgeschwindigkeitsfehler (εv) einer Winkelgeschwindigkeitsregelschleife für den Elektromotor (32) zu erzeugen.

5. Steuervorrichtung nach Anspruch 4, bei der das Anregungssignal (Se) durch den Winkelgeschwindigkeitsfehler (εv) amplitudenmoduliert wird.

6. Steuervorrichtung nach Anspruch 5, bei der das Anregungssignal erhalten wird, indem ein erstes Anregungssignal (Se1), das eine Amplitude hat, die eine Funktion des Winkelgeschwindigkeitsfehlers ist, und ein zweites Anregungssignal (Se2) summiert werden, wobei die ersten synchronen Demodulatoren angepasst sind, um jeweils ein Signal gleicher Frequenz und in Phase mit dem ersten Anregungssignal zu erfassen, und wobei die zweiten synchronen Demodulatoren angepasst sind, um jeweils ein Signal gleicher Frequenz und in Phase mit dem zweiten Anregungssignal zu erfassen.

7. Steuervorrichtung nach Anspruch 6, bei der das Anregungsmodul einen IQ-Generator (20) umfasst, wobei das erste Anregungssignal anhand eines Signals erzeugt wird, das in Bezug auf ein Referenzsignal phasenverschoben und an einem Ausgang Q des IQ-Generators vorhanden ist, und das zweite Anregungssignal anhand eines Signals erzeugt wird, das in Phase mit dem Referenzsignal und an einem Ausgang I des IQ-Generators vorhanden ist.

8. Steuervorrichtung nach Anspruch 7, bei der das phasenverschobene Signal und das Signal in Phase um 90° phasenverschoben sind.

9. Steuervorrichtung nach Anspruch 7, bei der das Anregungsmodul (5) ferner einen Modulator (21) und einen Summierer (22) umfasst, wobei der Modulator das phasenverschobene Signal mit dem Winkelgeschwindigkeitsfehler multipliziert, um das erste Anregungssignal zu erhalten, wobei das zweite Anregungssignal das Signal in Phase ist und wobei der Summierer angepasst ist, das erste Anregungssignal und das zweite Anregungssignal zu summieren, um das Anregungssignal zu erhalten.

10. Steuervorrichtung nach Anspruch 1, bei der das Steuermodul (3) vom Typ mit Pulsbreitenmodulation ist.

## Claims

1. A control device for a three-phase electric motor (32), the control device comprising:
- an inverter (30) and a control module (3) that generate inverter control signals for implementing a current servo-control loop for the electric motor (32);
- an excitation module (5) producing an excitation signal (Sₑ);
the control device being **characterized in that** it further comprises:
- a synchro-transmitter (4) having two coupling windings, one excitation winding (9) constrained to rotate with a rotor of the electric motor, and three measurement windings (11) mounted on a stator of the electric motor, the excitation signal being applied to the excitation winding (9) via the two coupling windings; and
- three first synchronous demodulators (8), each connected to a respective one of the three measurement windings of the synchro-transmitter, and each generating a respective current setpoint for the current servo-control loop for use by the control module.

2. A control device according to claim 1, further comprising three second synchronous demodulators (15), each connected to a respective one of the three measurement windings of the synchro-transmitter in order to produce information concerning the angular position of the rotor.

3. A control device according to claim 2, wherein the information concerning the angular position of the rotor is independent of the current setpoints.

4. A control device according to claim 3, including an angular speed measurement module (16) connected to the second synchronous demodulators in order to measure the angular speed of the rotor of the electric motor, the angular speed measurement module being used to generate an angular speed error (εᵥ) of an angular speed servo-control loop for the electric motor (32).

5. A control device according to claim 4, wherein the excitation signal (Sₑ) is amplitude modulated by the angular speed error (εᵥ).

6. A control device according to claim 5, wherein the excitation signal is obtained by summing both a first excitation signal (Sₑ₁) having an amplitude that is a function of the angular speed error and also a second excitation signal (Sₑ₂), each of the first synchronous demodulators being adapted to detect a signal having the same frequency and in-phase with the first excitation signal, and each of the second synchronous demodulators being adapted to detect a signal having the same frequency and in-phase with the second excitation signal.

7. A control device according to claim 6, wherein the excitation module comprises an IQ type generator (20), the first excitation signal being produced from a signal that is phase-shifted relative to a reference signal and present on a Q output of the IQ type generator, and the second excitation signal being produced from a signal that is in-phase with the reference signal and present on the I output of the IQ type generator.

8. A control device according to claim 7, wherein the phase-shifted signal and the in-phase signal present a phase difference of 90°.

9. A control device according to claim 7, wherein the excitation module (5) further comprises a modulator (21) and a summing circuit (22), the modulator multiplying the phase-shifted signal by the angular speed error in order to obtain the first excitation signal, the second excitation signal being the in-phase signal, and the summing circuit being adapted to sum the first excitation signal and the second excitation signal in order to obtain the excitation signal.

10. A control device according to claim 1, wherein the control module (3) is of the pulse-width modulation type.
